Europäisches Patentamt

European Patent Office

Office européen des brevets

(11) Publication number: **0 089 847**

**A1**

## (12) EUROPEAN PATENT APPLICATION

(21) Application number: 83301565.4

(22) Date of filing: 21.03.83

(51) Int. Cl.³: **B 65 G 1/06**
**B 65 G 43/08**

(30) Priority: 19.03.82 US 359891

(43) Date of publication of application:
28.09.83 Bulletin 83/39

(84) Designated Contracting States:
AT BE CH DE FR GB IT LI LU NL SE

(71) Applicant: NESTIER CORPORATION
10605 Chester Road
Cincinnati Ohio 45215(US)

(72) Inventor: Tabler, Charles P.
2435 Sir Martin Drive
Hamilton, Ohio 45013(US)

(74) Representative: Purvis, William Michael
Cameron et al,
D. Young & Co. 10 Staple Inn
London WC1V 7RD(GB)

(54) Accumulating conveyor control.

(57) A horizontal powered conveyor moves articles (1a, 1b, 1c) by a pusher (11) from an entrance station (3) to an exit station (4), and when the article or articles are pushed as far as they will go to the exit station (4), as determined by a fixed abutment (12), a drive system for the pusher (11) experiences an overload and responds by reversing the pusher drive and returning it to the entrance station (3). Photoelectric cells determine the absence of an article (1c) at the exit station (4) or the presence of an article (1a) at the entrance station (3) to actuate the pusher (11) in either case, after a suitable delay sufficient to allow load/unload equipment to depart. The pusher (11) may be driven electrically with a motor current trip relay in circuit or driven with working fluids and a working fluid pressure relay in circuit. The pusher (11) is carried by a carriage secured to a motor driven cable (17), and preferably the carriage is hinged so that the pusher (11) may drop below the support plane for the articles, by means of a carriage track portion. The support plane is determined by flights of undriven rollers (9).

FIG. 1

1

## "ACCUMULATING CONVEYOR CONTROL"

The invention relates to conveyors and more particularly to a horizontal powered conveyor.

United States Patent No. 3,731,790 discloses a reciprocating carriage that is raised to engage articles, is horizontally moved to convey the articles, and is lowered to deposit the articles. Complicated mechanisms are provided to determine the positioning of the carriage, and, in a commercial embodiment manufactured by the applicants, there are provided photoelectric cells at an entrance station and an exit station from the horizontal conveyor for actuating such mechanisms. The controls for the system are quite complex and include logic circuitry or a minicomputer.

It is well known to push articles, particularly palletized articles, along horizontal flights of undriven rollers.

According to the invention there is provded a horizontal powered conveyor, comprising:

horizontal support means for supporting a plurality of articles along a path between an entrance station at one end of said path and an exit station at the other end of said path;

abutment means for engaging an article at the exit station when the article has been moved in a conveying direction from the entrance station to the exit station and preventing, with an abutment force, further movement of the article in the conveying direction along said path;

pusher means having a pusher and being mounted for horizontal movement, when actuated, along said path from the entrance station to the exit station to engage the pusher with an article on a side thereof opposite to a side thereof engaged by the abutment means and to exert a horizontal conveying force on the article in said conveying direction, the pusher means including motor means receiving power at least up to a determined power level for driving the pusher and articles along said path with said determined power level corresponding to a determined horizontal conveying force; and control means responsive to the power received by the motor means and reversing the drive direction of the motor means and correspondingly the direction of movement of the pusher from towards the exit station to the reverse direction towards the entrance station when, due to said abutment force, said power and correspondingly said horizontal conveying force exceed said determined power level and said determined horizontal conveying force, respectively, and continuing the reverse direction drive of the pusher at least until the pusher reaches the entrance station.

Such a conveyor can economically and reliably take articles, particularly palletized articles, that are deposited at the entrance station and convey them automatically to the exit station, with allowance being made for an article already being at the exit station and additional articles being in between, and can automatically advance the articles sequentially as articles are removed at the exit station. The path is preferably defined by conventional flights of undriven conveyor rollers or wheels. The articles are moved by means of the pusher which extends above the support plane of the roller flights and which is driven by a motor, for example, electric, pneumatic, or hydraulic. The exit station is determined by the abutment means to stop the forwardmost article, and the pusher is stopped at whatever position it reaches when the article or articles it is pushing have gone as far as they can go with respect to the abutment, as determined by the power of the motor driving the pusher, for example, as determined by a motor current trip relay or a pressure responsive valve. Such a relay or valve can reverse the direction of drive of the pusher and return it to the entrance station, where a limit switch stops its drive. Drive starting can be accomplished by a photoelectric cell determining the absence of an article at the exit station or the presence of an article at the entrance station, with an actuation delay in either case sufficient to allow removal of load/unload equipment.

The pusher is preferably carried by a carriage riding on a track, which extends downwardly from the conveying path at the entrance station, so that a hinged portion of the carriage carrying the actual pusher can drop below the support plane at the entrance station to be out of the way of loading equipment.

The invention is diagrammatically illustrated by way of example in the accompanying drawings, in which:-

Figure 1 is a side elevation view of a first embodiment of a horizontal powered conveyor according to the invention, with a portion intermediate the ends removed;

Figure 2 is a side elevation view of a second embodiment of a horizontal powered conveyor according to the invention, showing only structure that is in addition to the structure of the embodiment of Figure 1;

Figure 3 is an end elevation view, taken from an entrance station at the left-hand said of Figure 1, in combination with an electrical schematic showing controls, of a horizontal powered conveyor according to either the first or the second embodiment;

Figure 4 is a schematic fluid diagram of a motor drive circuit that may be used in place of a motor drive circuit shown in Figure 3; and

Figure 5 is a fragmentary perspective view of a support rail of a horizontal powered conveyor according to the invention.

Referring to the drawings, a conveyor is provided to transport a plurality of loads 1a, 1b, 1c, etc., carried by pallets 2 from an entrance station 3 to an exit station 4 along a generally horizontal path. In general, the load and pallet combination is referred to as an article, since it may also be a box, or the like, and is delivered to the entrance station by hand or a forklift truck, for example, and further unloaded from the exit station in a similar manner. With respect to the length of the conveyor, each of the entrance station and exit station is defined by the length of an article, as measured along the path, from the respective terminal ends of the conveyor.

The articles are supported by means of supports that will provide a support surface, in this case a horizontal plane. The supports may be skid rails or the like, but preferably are spaced apart uniform cross section, bent sheet metal, rails 5, 6 that basically are of inverted U-shape. In a known manner for such rails, a web joining side legs of the inverted U-shape has a plurality of rectangular cutouts 7, as shown in Figure 5, and opposed apertures 8, one being shown in Figure 5, in the opposite side legs of the U-shape. Cylindrical rollers 9 having opposite axle stub shafts are inserted into respective cutouts 7 from the open side of the U-shape so that their axles will snap respectively into the apertures 8, which then act as bearing axle supports with the roller 9 extending through its respective cutout 7 upwardly to the common support plane. Therefore, the rails 5, 6 with their rollers 9 provide two parallel flights of rollers or conveyor wheels that will support the articles, particularly pallets, for free movement from one end of the conveyor to the other that is to say from the entrance station 3 to the exit station 4, with such rollers 9 being undriven. The rails 5, 6 are rigidly

4                                    0089847

secured in spaced apart, parallel relationship by means of cross beams 10. The cross beams 10 and rails 5, 6 constitute a frame, which is stationarily mounted on a support platform, such as legs on a floor.

To push or drive the articles from the entrance station 3 to or towards the exit station 4, there are provided one or more pushers 11. The or each pusher 11 extends above the support plane provided by the rollers 9 so as to engage the rear face of the articles and movement of the pusher 11 in the conveying direction towards the exit station 4 will move the articles supported on the rollers 9 in such direction. The article or articles being pushed will continue to travel along the conveyor until they engage a stationary or fixed abutment 12 or until they engage one or more downstream articles that are in tight engagement with each other and ultimately the fixed abutment 12. The fixed abutment 12 will prevent further movement of the articles in the conveying direction.

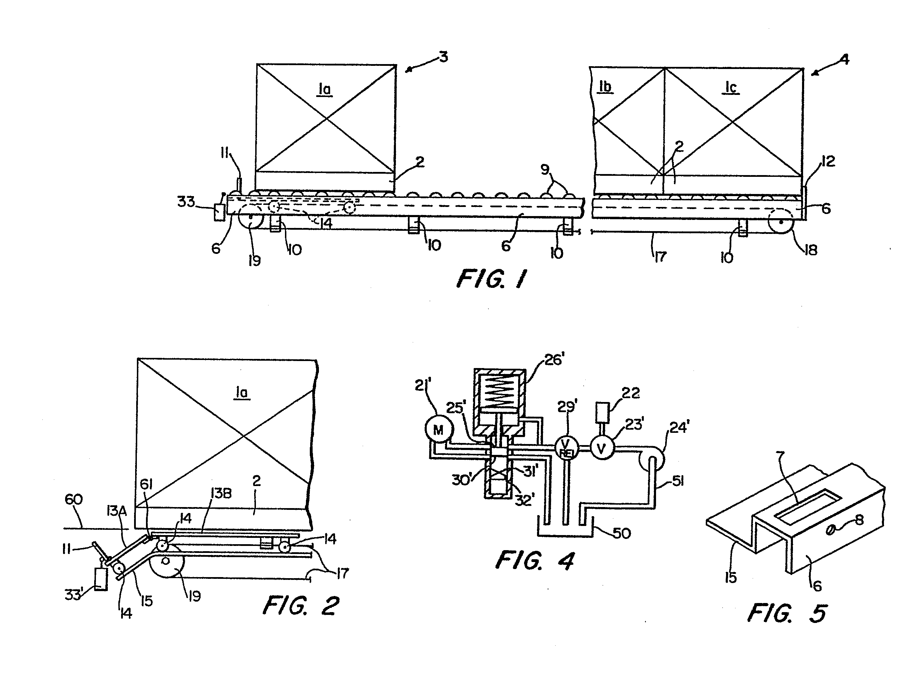

The pusher 11 is hinged to a carriage 13 so that it can rotate $90^{\circ}$ clockwise against a spring bias from an upright position (Figure 1) and back counterclockwise to the upright position. The carriage 13 may be constructed of bent sheet metal having a flat central plate and opposed downwardly depending side flanges that rotatably mount a plurality of wheels 14. Specifically, two wheels 14 are shown on each side of the carriage. The wheels 14 respectively ride upon and are supported by tracks 15 that, as shown in Figure 5, are horizontal flanges constructed by bending inwardly an innermost longer side leg of the inverted U-shape forming the rails 5 and 6. While the rails 5 and 6 are preferably bent steel sheet, with stamped cutouts 7 and apertures 8, they may be formed in other manner, such as by extruding aluminum and thereafter stamping out the cutouts 7 and apertures 8. Further, the carriage 13 is guided by means of vertical portions of the rails 5 and 6.

The carriage 13, and thus the pusher 11, are power driven back and forth along the conveying path. A downwardly depending lug 16, which may be a partially cut out and downwardly bent portion of the sheet metal carriage 13, is provided with an aperture and a suitable fastener, such as bolts or welding, for fixedly securing thereto the midportion of a cable 17. Preferably, the cable 17 is endless with upper and lower passes, and control portions drivingly extending around pulleys 18, 19. Alternatively, the pulleys 18 and 19 and the cable 17 may be replaced by sprockets and an

5                                      0089847

endless chain respectively. One of the pulleys 18 is drivingly secured on one end of a shaft 20 that is driven by means of a reversible electric motor 21.

Conveying drive of the articles from the entrance station to the exit station is terminated when automatic controls sense that the articles have butted up against the fixed abutment 12. When it is desired to move the article 1a from the entrance station 3 towards the exit station 4, a relay 22 closes a switch 23 to feed current from a battery 24 through the switch 23, normally closed contacts 25, a relay 26, a line 27 and the motor 21, to produce rotation in the forward direction for movement of the pusher 11 in the conveying direction, the current returning through a line 28, a conventional overload safety cutout 29 and normally closed contacts 30 to the battery 24. The safety cutout 29 is of the type that will disable the drive motor 21 if the power level is too great for safe operation.

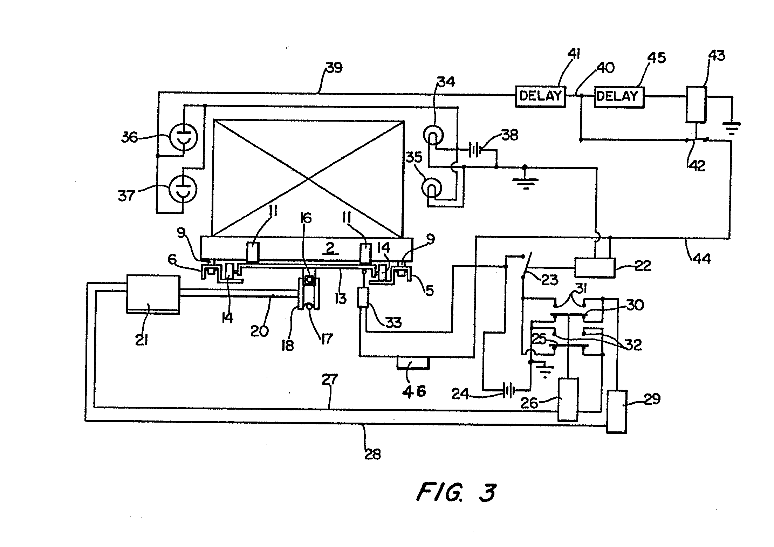

In the manner described above, the pusher 11 is moved in the conveying direction correspondingly to move the article 1a in the conveying direction until such time as the article 1a engages the fixed stop 12 or other loads or articles 1b, 1c, etc., that are, in turn, engaged with each other and the fixed abutment 12. At such time, the fixed abutment 12 and articles between the fixed abutment 12 and the pusher 11 will exert an abutment force, opposite to the conveying direction, upon the pusher 11 that will rise sharply to greatly exceed the force needed for normal conveying operation. This abutment force will load the motor 21 so that it will require greater power from the battery 24. This greater power is sensed by the trip relay 26, which more specifically measures the current. When the current exceeds a fixed amount representing a fixed power level, the relay 26 will trip to open the contacts 25 and 30. The fixed power level corresponds to a fixed horizontal abutment force that will be exerted by the fixed abutment 12 against the articles and pusher at the same instant. Opening of the contacts 25 and 30 will stop the motor 21. The trip relay 26 is conventional, and may be of the type known as an instantaneous trip current relay, operable with either AC or DC current, and with adjustable trip levels; they are commercially available as in Allen Bradley Bulletin 809, disclosing NEMA type 1 that are conventionally used automatically to open a motor starter control circuit and stop a conveyor when a jam-up of material occurs. In the present case, the trip relay 26, in addition to opening the contacts 25 and 30, also closes the contacts 31 and 32. Closure of the contacts 31 and 32, as seen in Figure 3, reverses the current being supplied to the motor 21, thereby to reverse rotation of the motor 21 and cause the pusher 11 to be driven in the direction opposite to the conveying direction to return it to its illustrated position in Figure 1 at the entrance station 3. Upon arrival at the entrance station 3, the pusher 11 will engage a limit switch 33, which will thereupon send a reset signal through the relay 26 to return the contacts thereof to the normal position of Figure 3. The spring hinge mounting of the pusher 11 permits it to rotate clockwise as viewed in Figure 1 to pass under a new load that may have been placed at the entrance station 3 while the carriage 13 was at a position towards the exit station.

Conveying is initiated by sensing the absence of an article at the exit station 4 or the presence of an article at the entrance station 3. For this purpose, a light beam source 34 is provided at the entrance station and a light beam source 35 is provided at the exit station, respectively, to project light beams horizontally and transversely across the conveying path at a level below the heights of an article resting upon the rollers 9 at such station. Photoelectric transducers 36 and 37 are respectively positioned on the opposite side of the entrance and exit stations, respectively, for receiving the beams of light of the light beam soruces 34, 35 when an article is absent from such stations. A suitable battery 38 and illustrated connections are used constantly to power the light beam sources 34, 35. The photoelectric transducers 36 and 37 are such that the transducer 36 at the entrance station will pass current from the battery 38 to a line 39 when it no longer receives the light beam from the light beam source 34, thereby indicating the presence of an article at the entrance station, while the photoelectric transducer 37 acts oppositely to pass current from the battery 38 to the line 39 when it does receive the light beam from the light beam source 35, thereby indicating the absence of an article at the exit station 4. The current is passed from the line 39 to a line 40 after a fixed delay, for example, 30 seconds, provided by a conventional delay circuit 41. From the line 40, current is passed through normally closed switch contacts 42 of a relay 43 to a line 44 for actuating the relay 22. Actuation of the relay 22 will close the normally open switch 23 to start conveying as described above.

Upon the start of conveying, the pusher 11 moves in the conveying direction, to the right as viewed in Figure 1, and disengages the limit switch 33. The limit switch 33 has normally open contacts, so that when the pusher 11 disengages the switch 33 in its movement toward the exit station 4, the contact of the limit switch 33 will close and pass current directly from the battery 24 to the line 44 bypassing the normally closed contacts 42 to continue the actuation of the relay 22 and hold the switch 23 closed. - After a sufficient time to accomplish movement of the pusher 11 and closing of the limit switch 33 as above-mentioned, a delay circuit 45, of conventional construction, will pass current to the relay 43 and open the contacts 42. With the contacts 42 open, it is seen that when the pusher returns to the entrance station after the above-described conveying function, it will engage the limit switch 33 to open the limit switch 33 contacts, which will de-energize the relay 22, which will open the switch 23 and stop the motor 21. It was mentioned above that the limit switch 33 will reset the trip relay 26 to its illustrated position, which may be accomplished directly (not shown) or as indicated above by discontinuing supply of current to the relay 26 when the switch 23 is opened. The limit switch 33 further performs a function of actuating a warning bell or light or other signal 46 when it is closed to indicate movement of the carriage 13. All of the battery earth connections are connected together.

The control circuitry described above is for use with DC current. Batteries were illustrated for convenience in the illustration, although in the actual embodiment rectified alternating current line power would be used, with appropriate stop-start switches and transformers for power control. For heavier usage, and as an alternative, the battery 24 could be replaced with an alternating current source to operate the motor 21, which would then be an AC motor, the trip relay 26 is conventional for both AC and DC operation. The controls operated by the battery 38, although preferably direct current controls, could also be alternating current controls. Further; it is contemplated that the motor 21 could be replaced by a working fluid motor, such as a pneumatic or hydraulic rotary vane or gear motor 21' shown in Figure 4. The battery 24 of Figure 3 is replaced by a variable pressure, working fluid pump 24' receiving working fluid from a reservoir 50 through a line 51 to deliver the same to a stop-start valve 23' which is under the control of the relay 22 and which, in turn, will selectively deliver pressurized working fluid to a maximum pressure relief valve 29', which, in turn, will deliver pressurized working fluid to a pressure responsive switching chamber 26', which will drive a changeover valve so as to raise it and disconnect normally connected valve ports 25', 30' and connect cross valve ports 31', 32' to the motor 21'. The device 26' is spring biassed and of a nature that it will instantaneously changeover the valve porting when the working fluid pressure reaches a fixed pressure or power level corresponding to the fixed abutment force mentioned above. The illustrated position of the valve block will rotate the motor 21' in one direction, whereas changeover of the valve block will rotate the motor 21' in the opposite direction. The controlled power source of Figure 4, either hydraulic or pneumatic, may be substituted in its entirety for the correspondingly numbered, interconnected items in Figure 3. Further, the structure of Figure 4 could be modified by replacing the rotary working fluid motor 21' with a reciprocating working fluid motor of a double-acting piston variety, which would be particularly desirable for short conveyor lengths, and which would then have a piston rod directly connected to the carriage 13 to eliminate the cable 17 and pulleys 18, 19 that are needed with the rotary-type motor 21 or 21'. The cable and pulley could if desired be replaced by a rack directly driven by means of a pinion secured to the shaft 20. Further, the pusher could have a downwardly depending key within a suitable key slot of a rail extending between and parallel to the rails 5, 6 to replace the carriage 13.

As a more specific illustration of the embodiment of Figure 1, or alternatively, as a separate embodiment, the carriage may be of the kind shown in Figure 2 or replaced by the carriage of Figure 2, respectively. In Figure 2, the rails 5 and 6, and their supported rollers 9, have been omitted for purposes of more clearly illustrating the track 15. At the one end or terminal end of the entrance station 3, the rails 5 and 6, or at least the tracks 15 thereof are bent downwardly to diverge away from a common support plane 60 as defined by the top surfaces of the rollers 9 which are not shown in Figure 2. Also, the carriage 13 is split into a first portion 13A having rollers 14 engaging the fixed length of the track 15 that extends downwardly away from the support plane 60, which first portion 13A of the carriage carries the pusher 11. A second portion 13B of the carriage is provided with wheels 14 and other structure previously explained, and is hingedly connected by means of a hinge 61 to the first portion 13A so that the two carriage portions 13A and 13B may pivot with respect to each other about a horizontal axis perpendicular to the conveying direction. Thus, it is seen that the pusher 11, when at its terminal point of travel at the entrance station 3, is entirely below the support plane 60 and thus, will not be contacted by the article 1a during loading of the article 1a onto the support rollers 9 and, therefore, will not interfere with such loading and further will not be subjected to abuse and wear during such loading. Furthermore, gravity will act upon the carriage, due to the inclined track portion, normally to bias the carriage against the limit switch 33' and maintain it in its position against vibrations and inadvertent dislodgement. When the relay 22 closes the switch 23 as mentioned above for initiating operation, the carriage will be pulled by the cable 17 to the right as viewed in Figure 2, and the pusher 11 will rise as the first portion 13A of the carriage travels upwardly along the inclined fixed length of the track 15 to extend above the support plane 60 prior to engaging the article 1a, thereafter to function as described above with respect to Figure 1.

Operation of the illustrated apparatus has been described concurrently with the description of the actual hardware, and will not be repeated. While a limit switch 33 is illustrated as a limit control, other conventional control components may be used. Instead of automatic operation provided by the limit switch 33 and photoelectric transducers 36, 37, etc., the switch 23 may be manually actuated as an alternative or in addition to the automatic control and in any event constitutes a conveying instruction device that will produce a conveying signal, more specifically, it will initiate the conveying operation by providing power to the motor 21. Instead of light beam soruces 34, 35 and photoelectric transducers 36, 37, other sensors may be provided, such as proximity or engagement switches to determine the presence or absence of articles at the entrance and exit stations, respectively.

## CLAIMS

1. A horizontal powered conveyor, comprising:

horizontal support means for supporting a plurality of articles along a path between an entrance station at one end of said path and an exit station at the other end of said path characterised by;

abutment means (12) for engaging an article (1c) at the exit station (4) when the article (1c) has been moved in a conveying direction from the entrance station (3) to the exit station (4) and preventing, with an abutment force, further movement of the article (1c) in the conveying direction along said path;

pusher means having a pusher (11) and being mounted for horizontal movement, when actuated, along said path from the entrance station (3) to the exit station (4) to engage the pusher (11) with an article on a side thereof opposite to a side thereof engaged by the abutment means (12) and to exert a horizontal conveying force on the article in said conveying direction, the pusher means including motor means (21) receiving power at least up to a determined power level for driving the pusher (11) and articles (1a, 1b, 1c) along said path with said determined power level corresponding to a determined horizontal conveying force; and

control means (26) responsive to the power received by the motor means (21) and reversing the drive direction of the motor means (21) and correspondingly the direction of movement of the pusher (11) from towards the exit station (4) to the reverse direction towards the entrance station (3) when, due to said abutment force, said power and correspondingly said horizontal conveying force exceed said determined power level and said determined horizontal conveying force, respectively, and continuing the reverse direction drive of the pusher (11) at least until the pusher (11) reaches the entrance station (3).

2. A horizontal powered conveyor according to claim 1, characterised by conveying instruction means providing a conveying signal to actuate the pusher means when conveying is desired.

3. A horizontal powered conveyor according to claim 2, characterised by limit control means (33) for detecting return of the pusher (11) to the entrance station (3) and, in response thereto, for deactuating the pusher means.

4. A horizontal powered conveyor according to claim 2 or claim 3, characterised in that said instruction means includes parallel operatively connected sensor means (34, 36 and 35, 37) at the entrance station (3) and the exit station (4) for providing said conveying signal when an article (1c) is absent from the exit station (4) and when an article (1a) is present at the entrance station (3).

5. A horizontal powered conveyor according to any one of claims 2 to 4, characterised in that said instruction means includes means (41) for delaying the actuation of the pusher means for a fixed period of time after said conveying signal is provided, said period of time being sufficiently long normally to remove handling equipment used to place an article (1a) at the entrance station (3) and used to remove an article (1c) from the exit station (4).

6. A horizontal powered conveyor according to claim 4 or claim 5, characterised in that the sensor means each includes means (34, 35) for producing a light beam across its respective station (3, 4) and photoelectric transducer means (36, 37) for receiving said light beam only in the absence of an article at the respective station.

7. A horizontal powered conveyor according to any one of claims 1 to 6, characterised in that the pusher means includes a cable (17) extending along said path and drivingly connected to the motor means (21), a carriage (13) mounted for movement along said path between the entrance and exit stations (3, 4) and drivingly connected to the cable (17), the pusher (11) being carried by the carriage (13).

8. A horizontal powered conveyor according to any one of claims 1 to 6, characterised in that the pusher means includes a stationary track (15) extending generally parallel to and along said path and supporting a carriage (13) for relative movement, the carriage (13) mounts the pusher (11), the track (15) at the entrance station (3) extends downwardly away from said path for a fixed length of the track (15) at its terminal end, the carriage (13) has a first portion (13A) that will be supported by said fixed length of downwardly extending track (15) at the entrance station (3) and a second portion (13B) supported by the remainder of the track at the entrance station (3) parallel to said path, hinge means (61) are provided hingedly connecting said first (13A) and second (13B) portions together for pivotal movement about a horizontal pivot axis, the pusher (11) is carried by the first portion (13A) of the carriage (13) and is entirely beneath a support plane (60) that is coextensive with the upper article supporting surface of the horizontal support means (9) when the carriage (13) is at the entrance station (3), and the carriage first portion (13A) pivots upwardly to be coextensive with the carriage second portion (13B) when the carriage (13) is moved from the entrance station (3) toward the exit station (4) so that the pusher (11) extends above the support plane (60).

9.     A horizontal powered conveyor according to any one of claims 1 to 8, characterised in that the horizontal support means comprises two parallel support rails (5, 6), a plurality of aligned freely rotatable support rollers (9) rotatably mounted on each of the support rails (5, 6) about horizontal axes perpendicular to said path and the rollers (9) and rails (5, 6) extend throughout the length of said path so that the uppermost portion of the rollers (9) lie in a common support plane (60) for supporting thereon the plurality of articles (1a to 1c).

10.    A horizontal powered conveyor according to any one of claims 1 to 9, characterised in that the motor means is an electric motor (21) and the control means is a trip current relay (26) that will actuate at a motor current corresponding to said fixed power level.

11.    A horizontal powered conveyor according to any one of claims 1 to 9, characterised in that the motor means is a working fluid motor (21') and the control means (26') is responsive to the pressure of the working fluid supplied to the motor (21').

12. A horizontal powered conveyor according to claim 9, characterised in that the abutment means (12) is a rigid fixed abutment extending above the support plane (60).

13. A horizontal powered conveyor, comprising:
horizontal support means for supporting a plurality of articles along a path between an entrance station at one end of said path and an exit station at the other end of said path characterised by;
abutment means (12) for engaging an article (1c) at the exit station (4) when the article (1c) has been moved in a conveying direction from the entrance station (3) to the exit station (4) and preventing, with an abutment force, further movement of the article (1c) in the conveying direction along said path;
pusher means having a pusher (11) and being mounted for horizontal movement, when actuated, along said path from the entrance station (3) to the exit station (4) to engage the pusher (11) with an article on a side thereof opposite to a side thereof engaged by the abutment means (12) and to exert a horizontal conveying force on the article in said conveying direction, the pusher means including motor means (21) receiving power at least up to a determined power level for driving the pusher (11) and articles (1a, 1b, 1c) along said path with said determined power level corresponding to a determined horizontal conveying force; and
wherein the pusher means includes a stationary track (15) extending generally parallel to and along said path and supporting a carriage (13) for relative movement, the track (15) at the entrance station (3) extends downwardly away from said path for a fixed length of the track at its terminal end, the carriage (13) has a first portion (13A) that will be supported by said fixed length of downwardly extending track at the entrance station (3) and a second portion (13B) supported by the remainder of the track (15) at the entrance station (3) parallel to said path and means (61) are provided hingedly connecting the first (13A) and second (13B) portions together for pivotal movement about a horizontal pivot axis, the pusher (11) is carried by the first portion (13A) of the carriage and is entirely beneath a support plane (60) that is coextensive with an upper article supporting surface of the horizontal support means (9) when the carriage (13) is at the entrance station (3), and the carriage first portion (13A) pivots upwardly to be coextensive with the carriage second portion (13B) when the carriage (13) is moved from the entrance station (3) toward the exit station (4) so that the pusher (11) will extend above the support plane (60).

14.    A horizontal powered conveyor according to claim 13, characterised by conveying instruction means which provides a conveying signal to actuate the pusher means when conveying is desired, and said instruction means includes means (41) for delaying the actuation of the pusher means for a fixed period of time after said conveying signal is provided, said period of time being sufficiently long normally to remove handling equipment used to place an article at the entrance station (3) and used to remove an article from the exit station (4).

15.    A horizontal powered conveyor according to claim 13 or claim 14, characterised in that the pusher means includes a cable (17) extending along said path and drivingly connected to the motor means (21), the carriage (13) being drivingly connected to the cable (17).

16.    A horizontal powered conveyor according to any one of claims 13 to 15, characterised in that the horizontal support means comprises two parallel support rails (5, 6), a plurality of aligned freely rotatable support rollers (9) rotatably mounted on each of the support rails (5, 6) about horizontal axes perpendicular to said path and the rollers (9) and rails (5, 6) extend throughout the length of said path so that the uppermost portion of the rollers (9) lie in a common support plane (60) for supporting thereon the plurality of articles (1a, 1b, 1c).

17.    A horizontal powered conveyor according to claim 16, characterised by limit control means (33) detecting return of the pusher (11) to the entrance station (3) and in response thereto deactuating the pusher means, and wherein the abutment means (12) is a rigid fixed abutment extending above the support plane (60).

18.    A horizontal powered conveyor, comprising:

horizontal support means for supporting a plurality of articles along a path between an entrance station at one end of said path and an exit station at the other end of said path characterised by;

abutment means (12) for engaging an article (1c) at the exit station (4) when the article (1c) has been moved in a conveying direction from the entrance station (3) to the exit station (4) and preventing, with an abutment force, further movement of the article (1c) in the conveying direction along said path;

pusher means having a pusher (11) and being mounted for horizontal movement, when actuated, along said path from the entrance station (3) to the exit station (4) to engage the pusher (11) with an article on a side thereof opposite to a side thereof engaged by the abutment means (12) and to exert a horizontal conveying force on the article in said conveying direction, the pusher means including motor means (21) receiving power at least up to a determined power level for driving the pusher (11) and articles (1a, 1b, 1c) along said path with said determined power level corresponding to a determined horizontal conveying force; and

wherein the pusher means includes a cable (17) extending along said path and drivingly connected to the motor means (21), a carriage (13) is mounted for movement along said path between said stations and is drivingly connected to the cable (13), and the pusher (11) is carried by the carriage (13).

19.    A horizontal powered conveyor according to claim 18, characterised by limit control means (33) detecting return of the pusher (11) to the entrance station (3) and in response thereto deactuating the pusher means, and conveying instruction means providing a conveying signal to actuate the pusher means when conveying is desired.

20.    A horizontal powered conveyor according to claim 18 or claim 19, characterised in that the pusher means includes a stationary track (15) extending generally parallel to and along said path and supporting the carriage (13) for relative movement, the track (15) at the entrance station (3) extends downwardly away from said path for a fixed length of the track (15) at its terminal end, the carriage (13) has a first portion (13A) that will be supported by the fixed length of downwardly extending track at the entrance station (3) and a second portion (13B) supported by the remainder of the track (15) at the entrance station (3) parallel to said path and means (61) hingedly connect said first (13A) and second (13B) portions together for pivotal movement about a horizontal pivot axis, the pusher (11) is carried by the first portion (13A) of said carriage and is entirely beneath a support plane (60) that is coextensive with an upper article supporting surface of the horizontal support means when the carriage (13) is at the entrance station (3), and the carriage first portion (13A) pivots upwardly to be coextensive with the carriage second portion (13B) when the carriage (13) is moved from the entrance station (3) toward the exit station (4) so that the pusher (11) extends above the support plane (60).

21.    A horizontal powered conveyor according to any one of claims 18 to 20, characterised in that the horizontal support means comprises two parallel support rails (5, 6), a plurality of aligned freely rotatable support rollers (9) rotatably mounted on each of the support rails (5, 9) about horizontal axes perpendicular to said path and the rollers (9) and rails (5, 6) extend through the length of said path so that the uppermost portion of the rollers (9) lie in a common support plane (60) for supporting thereon the plurality of articles (1a, 1b, 1c).

22.    A horizontal powered conveyor, comprising:
horizontal support means for supporting a plurality of articles along a path between an entrance station at one end of the path and an exit station at the other end of the path;
abutment means for engaging an article at the exit station when the article is moved in a conveying direction from the entrance station to the exit station and preventing further movement of said article in said direction along the path with at least a fixed horizontal abutment force;
pusher means having a pusher and being mounted for horizontal movement along said path from said entrance station to said exit station to engage said pusher with an article on the side opposite from said abutment means to exert a horizontal conveying force on the articles in said direction, when actuated, that is at least greater than said fixed abutment force, and said pusher means including motor means receiving power at least up to a fixed power level for driving said pusher and articles along said path with said power level corresponding to a horizontal conveying force at least as great as said fixed abutment force; and

control means responsive to the power received by said motor means and reversing the drive direction of said motor means and correspondingly the direction of movement of said pusher from towards said exit station to the reverse direction towards said entrance station when said power and correspondingly said conveying force exceed said fixed power level and fixed abutment force, respectively, and continuing the reverse direction drive of said pusher at least until said pusher reaches said entrance station.

0089847

FIG. 1

FIG. 2

FIG. 4

FIG. 5

0089847

FIG. 3

**0089847**
Application number

European Patent
Office

**EUROPEAN SEARCH REPORT**

EP  83 30 1565

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 727 165  (KETTNER)  <br><br> * The whole document * | 1-3,7, 9,13, 15,16, 18,19, 21,22 | B 65 G    1/06 <br> B 65 G   43/08 |
| A | DE-U-1 772 484  (TUCHENHAGEN) <br> * Page 2, lines 2-30 * | 1,13, 18,22 | |
| A | Patent Abstracts of Japan vol. 4, no. 23, 26 February 1980 page 36M93 & JP-A-54-159975 | 1 | |
| A | DE-A-2 927 692  (JÜRGENS) <br> * Page 4, lines 4-15 * | 4,6 | |
| A | DE-B-1 531 876  (CONSTRUCTIONS MILLS-K S.A.) <br> * Column 1, lines 54-60 * | 5,14 | TECHNICAL FIELDS SEARCHED (Int. Cl. ³) <br><br> B 65 G    1/00 <br> B 65 G   25/00 <br> B 65 G   43/00 <br> B 65 G   47/00 <br> B 65 G   49/00 |
| D,A | US-A-3 731 790  (ESSER et al.) | | |
| A | US-A-3 730 327  (LIEBERMAN) | | |

The present search report has been drawn up for all claims

| Place of search | Date of completion of the search | Examiner |
|---|---|---|
| BERLIN | 13-06-1983 | SIMON J J P |